# FASCICULE DE BREVET EUROPEEN

(11) **EP 3 382 996 B1**
(45) Date de publication et mention de la délivrance du brevet: **21.12.2022**
(21) Numéro de dépôt: 18305369.3
(22) Date de dépôt: 30.03.2018
(51) Int. Cl.: H04L 67/1061

(54) **DISPOSITIF DE COMMUNICATION ET RÉSEAU DE COMMUNICATION**
KOMMUNIKATIONSVORRICHTUNG UND -NETZ
COMMUNICATION DEVICE AND COMMUNICATION NETWORK

(30) Priorité: 31.03.2017 FR 1700353
(43) Date de publication de la demande: 03.10.2018
(73) Titulaire: Orange, 92130 Issy-les-Moulineaux (FR)
(72) Inventeur: PAILLET, Eric, 22730 Tregastel (FR)
(74) Mandataire: Cabinet Beau de Loménie

(56) Documents cités:
- US-A1- 2004 044 727
- US-A1- 2007 183 342

## Description

### Arrière-plan de l'invention

L'invention se rapporte au domaine général des communications entre plusieurs dispositifs, tels que par exemple des ordinateurs, des téléphones mobiles, des tablettes numériques, etc.

Elle concerne plus particulièrement les communications pair-à-pair (ou P2P pour « Peer-to-Peer » en anglais) entre plusieurs dispositifs. On entend par communication pair-à-pair entre deux dispositifs ou deux terminaux, l'échange de données entre ces deux dispositifs sans passer par un serveur central. Il peut s'agir d'un échange direct entre les deux dispositifs (on parle alors de communication D2D ou « Device-to-Device » en anglais), ou d'un échange via un ou plusieurs dispositifs intermédiaires mettant en œuvre deux à deux des communications D2D. L'ensemble des dispositifs ainsi connectés pair-à-pair forment un réseau maillé ou réseau mesh sans hiérarchie centrale. Chaque dispositif (ou pair) d'un tel réseau maillé est capable, via l'installation d'une application de communication pair-à-pair idoine, de recevoir, d'envoyer et de relayer des données vers un autre dispositif (i.e. à un autre pair) du réseau équipé de la même application. Aucune limitation n'est attachée au type de données échangées (voix, texte, data, etc.) entre les deux dispositifs lors de la communication pair-à-pair.

Le document US 2007/183342 A1 décrit un système de gestion de diffusion de contenu dans un réseau pair à pair.

Le document US 2004/0044727 A1 décrit un index distribué de ressources partagées dans un réseau pair-à-pair.

Les dispositifs d'un réseau maillé peuvent utiliser différentes technologies de connectivité pour se connecter entre eux en vue de communiquer pair-à-pair via une application de communication dédiée. Ils peuvent notamment s'appuyer indifféremment sur les technologies Bluetooth, WiFi (Wireless Fidelity), WiFi Direct, LTE (Long Term Evolution) Direct, etc. Ils peuvent en outre être connectés à des éléments externes au réseau maillé, comme par exemple à d'autres dispositifs appartenant à des réseaux d'opérateurs (ex. réseaux 3G, 4G, 5G, etc.) ou à des réseaux privés, etc., pour accéder par exemple au réseau public Internet.

Les réseaux maillés suscitent aujourd'hui un grand intérêt. Ils ont par exemple montré leur efficacité pour fournir des services de communication résilients dans des cas de rupture volontaire ou non des réseaux de communication classiques, par exemple en temps de guerre ou suite à une catastrophe naturelle. De tels réseaux maillés peuvent également être envisagés dans un but de se protéger contre une cyber-surveillance ou pour éviter que les données échangées entre les dispositifs transitent sur le réseau public Internet. Bien d'autres applications encore des réseaux maillés peuvent être envisagées.

Plusieurs solutions existent aujourd'hui pour permettre à des dispositifs de mettre en œuvre des communications pair-à-pair au sein d'un même réseau maillé. Parmi ces solutions, certaines, comme par exemple Serval Mesh ou Firechat, offrent en outre la possibilité d'avoir des communications pair-à-pair en temps réel. Toutefois, aucune des solutions connues ne permet à deux dispositifs appartenant à des réseaux maillés distincts de communiquer pair-à-pair, et notamment d'avoir des communications vocales en temps réel, de façon simple.

En effet, dans le cas de Serval Mesh, les communications en temps réel au sein d'un même réseau maillé s'appuient soit sur l'échange de messages de type textuels, soit, pour ce qui est des communications vocales, sur la définition de nouveaux protocoles appelés VoMP (Voice over Mesh Protocol) et MDP (Mesh Datagram Protocol), concurrents du protocole IP (Internet Protocol). Le recours à ces deux protocoles qui ne sont pas standardisés rend difficilement envisageable une communication vocale en temps réel pair-à-pair entre deux dispositifs appartenant à des réseaux maillés distincts.

FireChat propose différentes solutions permettant à deux dispositifs qui souhaitent échanger des données textuelles pair-à-pair et qui ne sont pas connectés directement l'un à l'autre au sein d'un même réseau maillé, de communiquer entre eux en temps réel. L'une de ces solutions consiste à passer par un dispositif prédéterminé qui joue le rôle de relai. Une autre solution consiste à diffuser les données destinées à être échangées à l'ensemble des dispositifs du réseau maillé : c'est alors l'application FireChat qui est installée sur chacun des dispositifs du réseau maillé qui est chargée de faire le tri parmi les données textuelles ainsi diffusées pour extraire celles qui concernent le dispositif sur lequel elle est installée. L'une comme l'autre de ces solutions se limitent à l'échange de données textuelles au sein d'un même réseau.

Une troisième solution envisagée par FireChat permet à deux dispositifs appartenant à deux réseaux maillés distincts d'échanger des données textuelles via un serveur de stockage centralisé dédié, accessible sur Internet. Ce serveur, qui sert de relai entre les dispositifs des deux réseaux maillés (et est apte à stocker les données en cas de non-réponse de l'un des dispositifs), ne communique pas selon un mode pair-à-pair avec les deux dispositifs des deux réseaux maillés. En outre, son mode de fonctionnement n'est pas nécessairement synchrone (notamment en cas d'indisponibilité de l'un des dispositifs) ce qui peut rendre difficile (voire impossible) une communication en temps réel entre les deux dispositifs. Par ailleurs et comme mentionné précédemment, FireChat se limite à l'échange de données textuelles.

Il existe donc un besoin d'une solution de communication pair-à-pair de bout en bout, permettant en particulier à deux dispositifs appartenant à deux réseaux maillés distincts d'établir commodément des communications entre eux, et notamment des communications vocales ou vidéo en temps réel.

### Objet et résumé de l'invention

L'invention répond notamment à ce besoin en proposant un dispositif de communication selon la revendication 1.

Préférentiellement, l'application de communication est configurée pour envoyer la requête d'établissement à un module de mise en relation du troisième dispositif de communication.

Par « accessible en mode serveur », on entend que le module de mise en relation est configuré pour écouter un port prédéterminé selon un protocole prédéterminé en vue de détecter si une requête prédéfinie particulière (i.e. requête d'établissement d'une communication pair-à-pair au sens de l'invention) lui est adressée spécifiquement, et pour répondre à cette requête en déclenchant un échange d'informations avec le dispositif qui lui a adressé la requête afin d'être en mesure d'établir un lien de communication pair-à-pair avec ce dispositif. Cette mise en relation entre le premier et le deuxième dispositif réalisée par le module de mise en relation du premier dispositif permet avantageusement au premier dispositif d'obtenir les informations préalables requises pour établir un lien de communication pair-à-pair avec le deuxième dispositif et permettre ultérieurement des communications pair-à-pair entre les deux dispositifs.

Grâce à l'invention, deux pairs peuvent entrer en contact directement, et notamment établir entre eux une communication interactive, sans recourir à un serveur dédié interne ou externe.

Corrélativement, l'invention concerne un réseau de communication comprenant une pluralité de dispositifs de communication conformes à l'invention.

Ainsi, l'invention offre la possibilité d'avoir une communication pair-à-pair de bout en bout entre deux dispositifs, quand bien même ceux-ci se trouvent dans des réseaux maillés distincts, et ce, quel que soit le type d'interconnexion existant le cas échéant entre ces réseaux maillés distinct (connexions passant par des réseaux mobiles (3G, 4G, etc.), par des réseaux d'entreprises, par des réseaux privés ou par le réseau Internet, etc.), et quel que soit le mode de connectivité utilisé au sein de chaque réseau maillé (les réseaux maillés peuvent utiliser des modes de connectivité distincts).

Cette communication pair-à-pair permise par l'invention s'appuie sur un réseau composé d'éléments ou de dispositifs (dont les deux dispositifs cherchant à communiquer entre eux) comprenant au moins trois modules identiques, à savoir une même application de communication pair-à-pair, un module de détection leur permettant de détecter les éléments du réseau, et un module de mise en relation permettant aux éléments du réseau d'établir de proche en proche des communications pair-à-pair. Grâce à cette architecture, il est possible d'assurer des communications pair-à-pair entre n'importe quels dispositifs selon l'invention, même s'ils n'appartiennent pas au même réseau maillé, y compris des communications pair-à-pair en temps réel telles que des communications vocales. Il convient toutefois de noter que l'invention s'applique à tout type de communication (i.e. transportant du texte, de la voix, de la vidéo, etc.) en temps-réel ou de façon asynchrone. L'invention permet donc de former en quelque sorte, en agrégeant une pluralité de dispositifs de communication selon l'invention qui sont capables de communiquer pair-à-pair, un réseau maillé global, et ce quelle que soit la configuration et la nature des sous-réseaux auxquels appartiennent les dispositifs de communication considérés.

Tout ceci est avantageusement permis par l'invention sans avoir à définir de nouveaux protocoles. L'invention est notamment compatible avec le protocole IP (Internet Protocol) existant et classiquement utilisé dans la plupart des réseaux aujourd'hui.

Les dispositifs du réseau selon l'invention peuvent appartenir ou non à des sous-réseaux différents.

Ainsi, dans un mode particulier de réalisation, au moins deux dispositifs de communication de ladite pluralité de dispositifs de communication du réseau selon l'invention appartiennent à des (sous-)réseaux maillés pair-à-pair distincts.

L'invention permet ainsi d'agréger plusieurs sous-réseaux maillés entre eux tout en maintenant une communication pair-à-pair entre les dispositifs de ces sous-réseaux.

Il convient toutefois de noter que l'invention n'exclut pas la possibilité que certains dispositifs du réseau selon l'invention appartiennent en outre à un réseau autre qu'un réseau maillé, comme par exemple à un réseau privé, un réseau d'entreprise, un réseau d'opérateur voire au réseau public Internet. Le dispositif de communication selon l'invention peut par exemple être intégré dans un serveur ou dans tout autre équipement d'un réseau d'opérateur. Le fait de disposer au sein de cet équipement des trois composants précités (application de communication pair-à-pair, module de détection et module de mise en relation) offre la possibilité d'avoir une communication pair-à-pair s'appuyant sur cet équipement même si celui-ci appartient à un réseau ayant une architecture différente d'un réseau maillé et met en œuvre des communications selon une autre solution de connectivité (Wifi, 4G ...) et un autre mode de fonctionnement. L'invention permet donc à des dispositifs appartenant à des réseaux divers et variés de communiquer en pair-à-pair.

Dans un mode particulier de réalisation, le module de mise en relation du dispositif de communication selon l'invention est conforme à la technologie WebRTC (Web Real-Time Communication).

Ce mode de réalisation a une application privilégiée pour des communications en temps réel. De façon connue, WebRTC est une interface de programmation (ou API pour Application Programming Interface) JavaScript actuellement en cours de définition au sein de I'IETF (Internet Engineering Task Force) et du consortium W3C (Word Wide Web Consortium), destinée à être intégrée au sein de navigateurs web pour permettre une communication en temps réel. Ce mode de réalisation permet de faciliter l'implémentation et le développement de l'invention en s'appuyant sur une interface standardisée.

Dans un autre mode de réalisation, le module de mise en relation est apte à échanger avec ledit deuxième dispositif de communication des informations relatives à des capacités du premier et/ou du deuxième dispositif et/ou des informations requises pour l'établissement de la communication pair-à-pair entre le premier et le deuxième dispositif.

Ces informations permettent de faciliter l'établissement d'une communication pair-à-pair entre le premier et le deuxième dispositif. De telles informations peuvent comprendre par exemple des informations de connectivité telles qu'un candidat ICE (Interactive Connectivity Establishment), classiquement utilisé (notamment par WebRTC) pour connecter deux pairs ensemble au sein d'un réseau, des paramètres d'initiation de session SDP (Session Description Protocol), des informations sur les connexions externes des dispositifs vers d'autres interfaces de connectivité, les bandes passantes disponibles, etc. Elles peuvent inclure également des informations relatives à la capacité des dispositifs comme par exemple leurs capacités en termes de stockage, de mémoire, de CPU (Central Processing Unit) disponible, etc.

Ces informations peuvent en outre être avantageusement utilisées lorsqu'une communication pair-à-pair entre deux dispositifs distants est envisagée via un ou plusieurs intermédiaires. Elles peuvent permettre en effet de choisir ces intermédiaires de sorte à optimiser la communication (bande passante, latence ...).

Dans un mode particulier de réalisation, le module de détection est apte à détecter des dispositifs de communication utilisant une pluralité d'interfaces de connexion distinctes.

Aucune limitation n'est attachée à la façon dont la connectivité est assurée entre les dispositifs du réseau selon l'invention. Divers types d'interfaces peuvent être utilisés, comme par exemple une interface Bluetooth, WiFi, WiFi Direct, LTE, LTE Direct, etc. Par ailleurs chacun des dispositifs peut disposer d'une ou de plusieurs interfaces de connectivité (ou connexion) lui permettant d'établir une communication pair-à-pair avec un autre dispositif du réseau selon l'invention.

Dans un mode particulier de réalisation, l'application de communication pair-à-pair est apte à interroger au moins un module de routage pour identifier au moins un dispositif de communication avec lequel établir une communication pour router un message.

Corrélativement, le réseau de communication selon l'invention comprend au moins un module de routage susceptible d'être interrogé par au moins un dispositif de communication du réseau pour identifier un autre dispositif de communication du réseau de communication avec lequel établir une communication pour router un message.

Le ou les modules de routage interrogés permettent à chaque dispositif du réseau selon l'invention d'identifier si nécessaire une route au sein du réseau pour envoyer un message ou une requête à un dispositif du réseau avec lequel il n'est pas en connexion directe, par exemple parce que celui-ci ne se trouve pas dans son voisinage (c'est-à-dire dans la portée de l'interface de connectivité qu'il utilise). Ce mode de réalisation permet de relier entre eux via des communications pair-à-pair des dispositifs distants.

Dans un mode particulier de réalisation, au moins un module de routage est intégré dans au moins un dispositif de communication du réseau de communication selon l'invention.

On note que tous les dispositifs du réseau de communication selon l'invention peuvent être équipés d'un module de routage.

L'invention vise donc également un dispositif de communication selon l'invention comprenant un dit module de routage. Ce dispositif de communication peut par exemple être un « Group Owner » d'un groupe WifiDirect, ou encore un élément particulier (par exemple, le routeur) d'un réseau Wifi (par exemple le wifi HOME) suivant le mode de connectivité considéré.

Dans ce mode de réalisation, chaque dispositif de communication équipé d'un module de routage est autonome pour déterminer la route à emprunter en vue d'atteindre un autre dispositif et d'établir une communication avec celui-ci. Ceci permet d'accélérer les échanges de données au sein du réseau ce qui peut être avantageux pour les communications en temps réel.

Dans un autre mode de réalisation, l'application de communication pair-à-pair est apte à interroger au moins un dit module de routage localisé dans un réseau externe à un réseau de communication auquel appartient le premier dispositif.

Ce mode de réalisation s'appuie sur l'interrogation d'un équipement (ex. serveur) distant hébergeant un module de routage, externe au réseau de communication selon l'invention. Le réseau externe dans lequel se trouve l'équipement distant hébergeant le module de routage peut être un réseau traversé ou non par la communication pair-à-pair.

Dans ce mode de réalisation davantage centralisé, il est plus facile de prendre en compte dynamiquement les changements de route pouvant intervenir typiquement du fait de l'apparition ou de la disparition de dispositifs de communication pouvant faire offices de relais de la communication au sein du réseau selon l'invention.

On peut également envisager, dans d'autres modes de réalisation, que le dispositif de communication et le réseau de communication selon l'invention présentent en combinaison tout ou partie des caractéristiques précitées.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 représente, de façon schématique, un réseau de communication conforme à l'invention, dans un mode particulier de réalisation ;
- la figure 2 représente un dispositif de communication selon l'invention appartenant au réseau de la figure 1 ; et
- la figure 3 illustre un mode de fonctionnement du réseau de communication.

### Description détaillée de l'invention

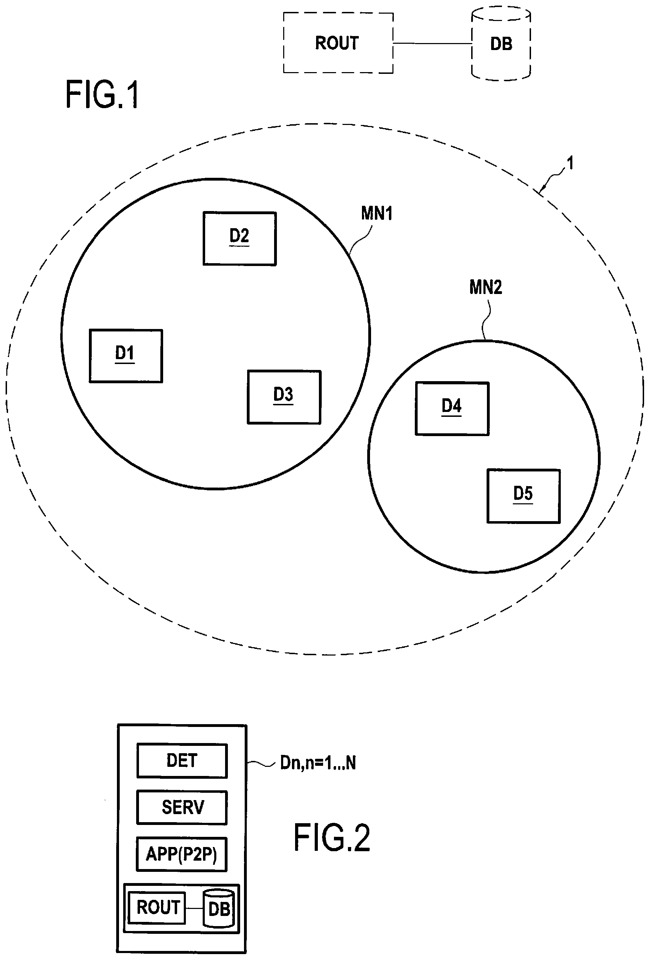

La **figure 1** représente, dans son environnement, un réseau 1 de communication conforme à l'invention, dans un mode particulier de réalisation.

Le réseau de communication 1 comprend une pluralité de dispositifs de communication D1, D2,..., DN mettant en oeuvre entre eux des communications pair-à-pair, N désignant un entier supérieur à 1. A cet effet, dans le mode de réalisation décrit ici, chaque dispositif de communication du réseau 1 est conforme à l'invention.

Dans l'exemple envisagé à la figure 1, les dispositifs de communication formant le réseau 1 sont tous des terminaux (au nombre de 5 sur la figure), tels que par exemple des téléphones mobiles, des tablettes numériques, des ordinateurs, etc., chaque terminal étant équipé d'au moins une interface de connectivité. Aucune limitation n'est attachée à la nature de cette interface. Il peut s'agir par exemple d'une interface Bluetooth, WiFi, WiFi Direct, LTE, LTE Direct, etc. Certains terminaux peuvent être équipés de plusieurs interfaces de connectivité.

En outre, aucune limitation n'est attachée à la nature des dispositifs D1, D2,..., DN considérés dans le réseau 1. Ces dispositifs peuvent être des terminaux ou des serveurs, ou n'importe quel type d'équipement d'un réseau de télécommunications. On suppose ici qu'ils ont l'architecture matérielle d'un ordinateur, c'est-à-dire qu'ils comprennent au moins un processeur, une mémoire vive, une mémoire morte, une mémoire non volatile, des périphériques d'entrée/sortie (tels qu'un clavier, un microphone, un haut-parleur ou encore un écran) ainsi que des moyens de communication comprenant la ou les interfaces de connectivité précitées.

Par ailleurs, dans l'exemple illustré à la figure 1 :
- les terminaux D1, D2 et D3 forment un premier (sous-)réseau maillé MN1 au sein duquel le dispositif D1 communique directement pair-à-pair avec le dispositif D2 et le dispositif D2 communique directement pair-à-pair avec le dispositif D3. Au sein de ce premier (sous-)réseau maillé MN1, le dispositif D1 peut communiquer avec le dispositif D3 par l'intermédiaire du dispositif D2 ; et
- les terminaux D4 et D5 forment un deuxième (sous-)réseau maillé MN2, distinct du premier (sous-)réseau maillé, et communiquent entre eux directement pair-à-pair.

Bien entendu cette configuration n'est donnée qu'à titre illustratif et d'autres configurations peuvent être envisagées. Par exemple, les dispositifs du réseau 1 peuvent appartenir à des sous-réseaux distincts, maillés ou non. Certains des dispositifs peuvent notamment appartenir à des réseaux d'opérateurs, ou des réseaux privés ou d'entreprises ou encore au réseau public internet, etc.

Conformément à l'invention, et comme illustré à la **figure 2****,** pour permettre la mise en œuvre de communications pair-à-pair entre chacun des terminaux D1, D2, D3, D3 et D5 du réseau 1, ceux-ci sont tous équipés des trois composants suivants :
- une application APP(P2P) de communication pair-à-pair ;
- un module de détection DET ; et
- un module de mise en relation SERV.

Ces trois composants sont ici des composants logiciels se présentant sous forme d'instructions de programmes d'ordinateur stockés dans la mémoire morte de chacun des dispositifs et lisible par leur processeur. Ils s'appuient ou commandent les éléments matériels de chacun des dispositifs, tels que leurs moyens de communication, leurs mémoires, etc. La configuration d'un tel module pour qu'il remplisse une fonctionnalité donnée s'entend donc ici comme la prévision au niveau de ce module d'instructions informatiques lui permettant d'exécuter la fonctionnalité indiquée.

Le module de détection DET de chaque dispositif Dn considéré, n=1,...,N, est configuré pour détecter la présence d'un ou de plusieurs dispositifs de communication munis d'une interface de connectivité allumée ou active (autrement dit, accessibles par le dispositif de communication Dn, c'est-à-dire avec lesquels le dispositif de communication Dn peut établir un lien de connectivité via cette interface), et équipés de l'application de communication pair-à-pair APP(P2P). Le module de détection DET peut être par exemple configuré pour détecter les dispositifs de communications localisés dans le voisinage du dispositif Dn, c'est-à-dire dans la portée de l'interface de connectivité considérée.

Le module de détection DET est en outre apte à établir une ou plusieurs connexions avec les dispositifs de communication détectés. On note que lorsqu'une connexion est établie par le module de détection DET d'un dispositif de communication Dn avec un dispositif de communication Dk se trouvant dans un autre réseau que le réseau dans lequel se trouve le dispositif de communication Dn, le module de détection DET du dispositif Dn peut être amené à passer par un équipement externe au réseau de communication du dispositif Dn, comme par exemple suivant le contexte, par un routeur WiFi accessible par les deux dispositifs de communication Dn et Dk ou un réseau mobile sur lequel peuvent se connecter les dispositifs de communication Dn et Dk, etc.

Le module de détection DET peut être configuré pour détecter et établir une connexion selon une unique interface de connectivité déterminée. En variante, il peut être capable de détecter et d'établir des connexions selon plusieurs interfaces de connectivité distinctes. Ainsi par exemple, il peut être configuré pour détecter les dispositifs de communication munis aussi bien d'une interface Bluetooth que des dispositifs de communications munis d'une interface WiFi. Aucune limitation n'est attachée ni à la nature des interfaces que peut détecter le module de détection DET et selon lesquelles il peut établir des connexions, ni au nombre de ces interfaces.

Le module de détection DET est, comme mentionné précédemment, configuré pour déterminer si les dispositifs qu'il a détectés et qui sont accessibles par le dispositif de communication Dn (parce que disposant d'une interface de connectivité allumée ou active à laquelle le dispositif Dn peut se connecter), sont équipés de l'application de communication pair-à-pair APP(P2P) pour pouvoir communiquer de façon ad hoc avec le dispositif Dn.

On note qu'un tel module de détection est connu en soi, et déjà présent par exemple dans les API de l'état de la technique mettant en œuvre la fonctionnalité WiFi Direct. Ces API prévoient, lors de la négociation réalisée entre terminaux voisins pour utiliser la fonctionnalité WiFi Direct (qui permet de mettre en œuvre des communications pair-à-pair entre deux terminaux voisins via une interface WiFi), la découverte des terminaux présents dans le voisinage équipés d'une interface WiFi équipée d'une application de communication dédiée mettant en œuvre cette fonctionnalité. L'implémentation des fonctionnalités du module de détection pour une autre interface qu'une interface WiFi ne poserait aucun problème à l'homme du métier et n'est pas décrite en détail ici.

Le module de mise en relation SERV est conformément à l'invention, un composant du dispositif de communication Dn qui est accessible en mode serveur. Par « accessible en mode serveur », on entend ici que le module de mise en relation SERV est configuré pour écouter (au moins) un port prédéterminé (noté P) selon (au moins) un protocole particulier (par exemple selon le protocole HTTP (HyperText Transfer Protocol) (noté PROT), et ce, en vue de détecter si une requête prédéfinie particulière (à savoir ici une requête d'établissement d'une communication pair-à-pair notée REQ) lui est spécifiquement adressée par un dispositif de communication équipé de l'application APP(P2P) et détecté par son module de détection DET. Il est en outre configuré selon ce mode de fonctionnement de type « serveur » pour répondre à cette requête en déclenchant et en orchestrant un échange d'informations avec le dispositif qui lui a adressé la requête et en établissant à l'issue de cet échange un lien de communication pair-à-pair avec ce dispositif sur la base des informations échangées.

Plus particulièrement, à cet effet, dans le mode de réalisation décrit ici, le module de mise en relation SERV est apte à échanger avec le ou les dispositifs Dk, k≠n, détectés par son module de détection DET, et qui lui adresse(nt) une requête d'établissement d'une communication pair-à-pair, divers types d'informations requises pour l'établissement d'une communication pair-à-pair avec ce ou ces dispositifs, comme notamment :
- des informations relatives à des capacités du dispositif Dn et des dispositifs Dk, comme par exemple à des capacités de stockage, de mémoire, de CPU disponibles ou encore concernant la résolution de l'écran le cas échéant du dispositif, du ou des codecs qu'ils utilisent, etc. La nature de ces informations dépend bien entendu du contexte d'application de l'invention et du type de communication destinée à être mise en œuvre entre les dispositifs (communication temps réel ou non, s'appuyant sur l'échanges de données de type texte ou voix ou vidéo, etc.) ; et/ou
- des informations de connectivité, permettant de connecter le dispositif Dn aux dispositifs Dk, comme par exemple, des paramètres de sessions SDP, un candidat ICE, une bande passante disponible, etc.

De telles informations sur les capacités des dispositifs et/ou de connectivité sont nécessaires pour permettre l'établissement d'un lien de communication pair-à-pair entre les dispositifs (préalablement à une communication pair-à-pair à proprement parler entre les dispositifs). Conformément à l'invention, c'est le module de mise en relation SERV du dispositif Dn qui est avantageusement configuré pour déclencher et orchestrer cet échange d'informations avec les dispositifs Dk afin de permettre l'établissement d'un lien de communication pair-à-pair avec les dispositifs Dk. Aucun serveur externe aux dispositifs n'est requis pour orchestrer l'obtention de ces informations et permettre la mise en relation des dispositifs Dn et Dk préalablement à leurs communications pair-à-pair.

Dans le mode de réalisation décrit ici, le module de mise en relation SERV est en outre configuré pour permettre l'échange d'informations entre le module de détection DET et l'application de communication APP(P2P) au sein du dispositif Dn. Ces informations sont par exemple un identifiant du dispositif Dn, ou son adresse IP, qui peuvent être utilisées par les deux modules.

En variante, le module de détection DET et l'application de communication APP(P2P) peuvent être configurés pour s'échanger ces informations directement.

Dans un mode de réalisation particulier de l'invention, le module de mise en relation SERV et l'application APP(P2P) peuvent s'appuyer sur la technologie WebRTC et notamment les fonctionnalités mis en œuvre par les serveurs WebRTC. L'invention ne se limite toutefois pas à ce mode de réalisation ni à cette technologie.

L'application de communication pair-à-pair APP(P2P) présente sur chaque dispositif Dn du réseau 1 est une application logicielle apte à gérer la communication établie proprement dite. Aucune limitation n'est attachée à la nature de cette communication. Il peut s'agir d'une communication comprenant l'échange de données textuelles, d'une communication vocale, ou vidéo, d'une communication en temps réel ou s'appuyant sur un échange asynchrone de messages, etc.

Elle comprend ici une interface homme-machine (ou IHM) connue en soi, qui s'interface avec les périphériques d'entrée/sortie du dispositif Dn et permet à un utilisateur du dispositif Dn de communiquer avec d'autres utilisateurs via leurs terminaux Dk respectifs, selon un ou plusieurs modes de communication (texte, voix, vidéo, etc.).

Conformément à l'invention, pour établir une communication pair-à-pair entre le dispositif Dn et un autre dispositif Dk détecté par le module de détection DET, l'application de communication pair-à-pair APP(P2P) est configurée pour envoyer une requête d'établissement REQ d'une communication pair-à-pair au dispositif Dk, et plus particulièrement au module de mise en relation SERV du dispositif Dk. Cette requête REQ est adressée spécifiquement par l'application APP(P2P) du dispositif Dn au module de mise en relation SERV du dispositif Dk en l'envoyant sur le port P et selon le protocole PROT que le module de mise en relation SERV du dispositif Dk écoute. Le module de mise en relation SERV du dispositif Dk répond à cette requête d'établissement en établissant un lien pair-à-pair avec le dispositif Dn. Une fois ce lien établi, les dispositifs Dn et Dk peuvent communiquer pair-à-pair (selon un lien direct ici), par échange de messages ou de requêtes suivant l'application APP(P2P) considérée.

Pour établir une communication pair-à-pair entre deux dispositifs de communication distants Dn et Dk appartenant par exemple à deux réseaux maillés distincts ou au même réseau maillé, l'application APP(P2P) est configurée pour interroger un ou plusieurs modules de routage ROUT afin d'identifier une route dans le réseau de communication 1 permettant de relier ces deux dispositifs de communication. Par route, on entend une succession de dispositifs communiquant pair-à-pair (et plus précisément dispositif-à-dispositif (D2D), c'est-à-dire directement deux à deux), servant d'intermédiaires entre les dispositifs Dk et Dn pour supporter la communication entre ces deux dispositifs, autrement dit pour relayer les messages et/ou les requêtes échangé(e)s entre ces dispositifs dans le cadre de la communication.

Dans le mode de réalisation illustré sur les figures 1 et 2, chaque dispositif de communication D1 à D5 comprend un module de routage ROUT pouvant être interrogé de façon autonome par l'application de communication pair-à-pair APP(P2P) du dispositif de communication.

Dans un autre mode de réalisation, on peut considérer un ou plusieurs modules de routage ROUT se trouvant en dehors du réseau 1 et des réseaux maillés MN1 et MN2 (représenté en traits discontinus sur la figure 1), par exemple sur un serveur central, accessible par tous les dispositifs de communication D1 à D5, et situé dans un réseau externe au réseau 1, tel que par exemple dans un réseau d'opérateur. On parle alors d'un mode de routage centralisé.

On note que lorsque le réseau 1 comprend une pluralité de modules de routage (qu'ils soient hébergés par les dispositifs de communication ou qu'ils se trouvent sur d'autres équipements du réseau 1), la synchronisation des données de ces modules de routage n'est pas obligatoire. Dans un tel cas de figure, chaque dispositif de communication peut interroger un pool de modules de routage pour parvenir à identifier une route afin d'établir une communication vers un autre dispositif de communication du réseau 1.

En variante encore, seulement une partie des dispositifs de communication du réseau 1 héberge un tel module de routage, ces dispositifs de communication pouvant être interrogés par les dispositifs du réseau 1 ne comportant pas de tels modules de routage.

Chaque module de routage ROUT exploite et héberge ici une base de données DB répertoriant au moins un sous-ensemble de dispositifs de communication du réseau 1 (via un identifiant par exemple) ainsi que leur localisation géographique et, de manière optionnelle, d'autres caractéristiques comme des informations de bande passante disponible, de mémoire, etc., afin de permettre au module de routage d'identifier une route dans le réseau 1 pour une communication pair-à-pair lorsqu'il est interrogé par le dispositif de communication qui l'héberge. La base de données DB est mise à jour préférentiellement ici en temps réel, c'est-à-dire à chaque apparition (ex. suite à l'allumage d'un dispositif ou au lancement de l'application APP(P2P) sur ce dispositif) et à chaque disparition (ex. suite à l'extinction d'un dispositif ou à la déconnexion de l'application APP(P2P) du dispositif) d'un dispositif de communication dans le réseau 1.

En variante, une mise à jour moins fréquente de la base de données DB (ex. périodique) peut être envisagée notamment lorsque le nombre de dispositifs de communication dans le réseau 1 est important (par exemple, supérieur à quelques centaines de dispositifs).

On note que la base de données DB n'est pas nécessairement hébergée par le module de routage ROUT et peut se trouver dans un espace de stockage distant. On suppose ici dans un souci de simplification que les bases de données DB hébergées par les différents dispositifs de communication D1 à D5 du réseau 1 sont synchronisées entre elles.

Différents modes d'interrogation du module de routage ROUT hébergé par chaque dispositif de communication D1 à D5 peuvent être envisagés. Ainsi l'application APP(P2P) d'un dispositif de communication peut interroger son module de routage soit pour identifier une route à emprunter dans le réseau 1 (i.e. une succession de dispositifs de communication), soit pour identifier un dispositif de communication relai localisé par exemple dans le voisinage du dispositif de communication sur lequel elle est installée pour lui transmettre un message ou une requête en vue d'acheminer ce message ou cette requête vers son destinataire. Lors de son interrogation, l'application APP(P2P) peut, outre le dispositif de communication final avec lequel il cherche à échanger des données, indiquer d'autres caractéristiques, comme par exemple un critère de sélection du dispositif de communication relai ou de la route à emprunter tels que « route la plus rapide » (en termes de dispositifs traversés), « route offrant le meilleur débit », « route offrant la plus faible latence », etc. Bien d'autres critères peuvent être envisagés en variante. Ceci peut permettre de communiquer au sein du réseau 1 en utilisant un chemin répondant à certains critères particuliers (passage par des dispositifs relais ayant certaines caractéristiques en termes de capacité CPU, de mémoire, de stockage, de charge, de latence ou encore de débit).

Pour déterminer la route à emprunter ou le dispositif de communication relai pour atteindre un dispositif de communication final, le module de routage ROUT peut appliquer des protocoles de routage connus de l'homme du métier. Ainsi, dans l'exemple envisagé à la figure 1 où chaque dispositif de communication héberge un module de routage, celui-ci peut utiliser par exemple les protocoles de routage définis par le groupe de travail MANET (Mobile Ad Hoc NETworks) de l'IETF pour les réseaux ad hoc, tels que le protocole de routage réactif DSR (Dynamic Source Routing) ou encore le protocole de routage proactif OLSR. Ces algorithmes sont préférentiellement appliqués pour des réseaux comprenant quelques dizaines voire quelques centaines de dispositifs de communication, afin de ne pas surcharger le réseau du fait du nombre de messages échangés entre les dispositifs de communication à chaque routage d'une communication.

Ainsi, l'invention permet d'établir une communication en mode pair-à-pair entre deux dispositifs de communication qui n'appartiennent pas nécessairement au même réseau maillé, et ce selon différentes modalités (texte, voix, vidéo, données, etc.).

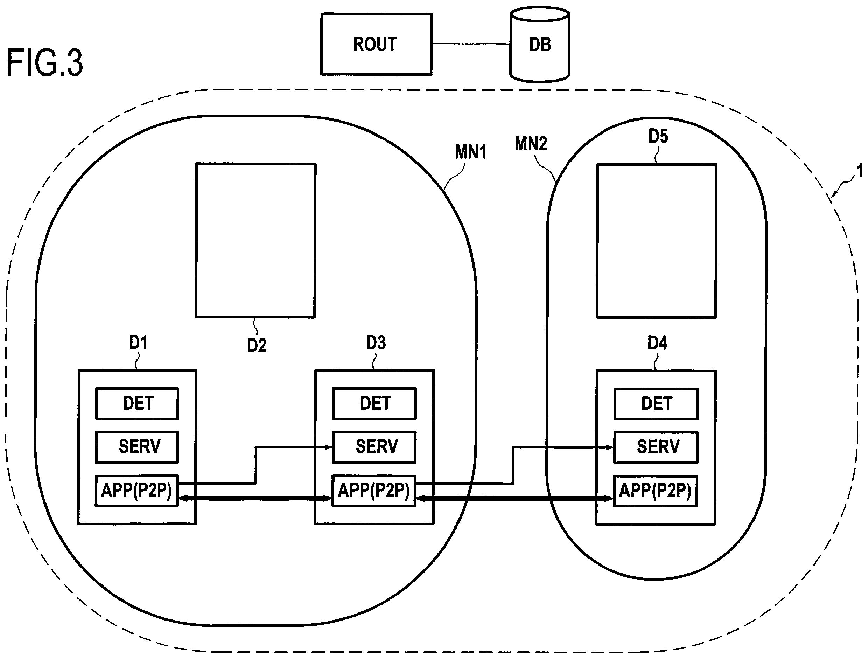

La **figure 3** illustre schématiquement une communication entre le dispositif de communication D1 et le dispositif de communication D4 via le dispositif de communication D3, D1 et D3 appartenant au même réseau maillé MN1 et D4 appartenant au réseau maillé MN2.

Dans cette configuration, lorsque le dispositif D1 souhaite établir une communication avec le dispositif de communication D4, le module de détection DET du dispositif D1 détecte les ou les dispositifs de communication situés dans son voisinage possédant une interface de connectivité déterminée (ex. de type Bluetooth) et sur lesquels l'application de communication pair-à-pair APP(P2P) est installée. On suppose, dans l'exemple envisagé à la figure 3, que le module de détection DET du dispositif D1 détecte les dispositifs de communication D2 et D3 appartenant au même réseau maillé MN1 que le dispositif D1. On note que cette étape de détection préalable permet aux modules de détection DET respectifs des différents dispositifs du réseau 1 de détecter non seulement la présence des dispositifs localisés dans leur voisinage mais également d'échanger avec ces dispositifs leurs capacités afin d'identifier quels sont ceux qui sont équipés de l'application APP(P2P). Ainsi non seulement D1 détecte que le dispositif D3 est dans son voisinage et est équipé de l'application APP(P2P), mais D3 détecte également que D1 se trouve dans son voisinage et est équipé de cette même application.

Le dispositif de communication D4 ne faisant pas partie des dispositifs détectés par le module de détection DET (par exemple parce qu'il n'est pas joignable via l'interface Bluetooth du dispositif D1), l'application pair-à-pair APP(P2P) du dispositif D1 interroge son module de routage ROUT pour déterminer une route ou au moins un dispositif de communication intermédiaire pour joindre le dispositif de communication D4.

Le module de routage ROUT du dispositif D1 interroge à son tour sa base de données DB et identifie la route constituée des dispositifs de communication D3 et D4. Il transmet la route ainsi identifiée à l'application de communication APP(P2P) du dispositif de communication D1.

Le dispositif de communication D3 se trouvant dans le voisinage du dispositif de communication D1 (au sens de l'interface Bluetooth considérée ici), ce dernier établit (si elle n'existe pas déjà), via son module de détection DET et son interface de connectivité, une connexion avec le dispositif D3.

Puis l'application APP(P2P) du dispositif D1 envoie à destination du module de mise en relation SERV du dispositif D3 une requête d'établissement d'une communication pair-à-pair sur le port P et selon le protocole PROT.

Sur réception de cette requête, le module de mise en relation SERV du dispositif D3 orchestre un échange d'informations entre les deux dispositifs D1 et D3 pour permettre l'établissement de la communication pair-à-pair directe entre ces deux dispositifs (ex. candidats ICE, informations de session SDP, etc.). Les informations susceptibles d'être échangées entre les dispositifs ont été décrites ci-dessus et ne sont pas détaillées de nouveau ici.

Suite à cet échange d'informations, la communication pair-à-pair est établie entre les dispositifs D1 et D3, et des échanges de données bidirectionnels (via des messages ou des requêtes) entre les applications APP(P2P) des deux dispositifs D1 et D3 peuvent avoir lieu (formalisés par une double flèche sur la figure 3).

Par ailleurs, et de façon similaire à ce qui vient d'être décrit, le module de détection DET du dispositif D3 détecte que le dispositif D4 se trouve dans son voisinage (par exemple à partir d'informations disponibles sur le dispositif D4 dans la base de données DB du module de routage ROUT du dispositif D3, ou via son interface de connectivité si celle-ci est par exemple de type Bluetooth ou WiFi) et est muni de l'application APP(P2P). Le module de détection DET du dispositif D3 établit alors une connexion avec le dispositif D4, qui a lui-même, via son module de détection DET, détecté la présence du dispositif D3 et l'installation de l'application APP(P2P) sur ce dernier. On note que les dispositifs D3 et D4 n'appartenant pas au même réseau maillé (D3 appartient au réseau maillé MN1, tandis que D4 appartient au réseau maillé MN2), le module de détection DET du dispositif D3 peut le cas échéant détecter la présence du dispositif de communication D4 dans son voisinage en utilisant une interface de connectivité différente de celle qu'il utilise avec le dispositif de communication D1 (ex. interface WiFi au lieu de Bluetooth, ou une interface filaire), ou en consultant les informations de localisation géographique contenues dans la base de données DB de son module de routage ROUT. En outre, il peut être amené à établir un lien de connexion avec le dispositif de communication D4 en passant par un équipement externe au réseau MN1, comme par exemple suivant le contexte, un routeur WiFi accessible par les dispositifs de communication D3 et D4, un réseau mobile sur lequel peuvent se connecter les dispositifs de communication D3 et D4, etc.

Puis l'application APP(P2P) du dispositif D3 envoie à destination du module de mise en relation SERV du dispositif D4 une requête d'établissement d'une communication pair-à-pair sur le port P et selon le protocole PROT. Sur réception de cette requête, le module de mise en relation SERV du dispositif D4 orchestre un échange d'informations entre les deux dispositifs D3 et D4 pour permettre l'établissement de la communication pair-à-pair directe entre ces deux dispositifs (ex. candidats ICE, informations de session SDP, etc.). Suite à cet échange d'informations, la communication pair-à-pair est établie entre les dispositifs D3 et D4, et des échanges de données bidirectionnels (via des messages ou des requêtes) entre les applications APP(P2P) des deux dispositifs D3 et D4 peuvent avoir lieu (formalisés par une double flèche sur la figure 3).

Une fois cette communication établie, le dispositif D3 peut relayer vers le dispositif D4 des messages qui lui sont transmis par le dispositif D1 à destination du dispositif D4, et vers le dispositif D1 des messages qui lui sont transmis par le dispositif D4 à destination du dispositif D1. Une communication pair-à-pair est ainsi rendue possible entre les dispositifs D1 et D4 par l'intermédiaire du dispositif D3.

Cet exemple n'est donné qu'à titre illustratif et peut être bien entendu généralisé à plusieurs dispositifs de communication intermédiaires. Le réseau 1 formé des dispositifs D1 à D5 permet donc d'agréger en quelque sorte les réseaux maillés MN1 et MN2 de sorte à permettre des communications pair-à-pair entre les dispositifs de communication de ces réseaux.

## Revendications

1. Dispositif de communication (D1-D5), dit premier dispositif, comprenant :
- une application (APP(P2P)) de communication pair-à-pair ; et
- un module de détection (DET) configuré pour détecter au moins un dispositif de communication comprenant ladite application de communication pair-à-pair, ce module de détection étant apte à établir une connexion avec ledit dispositif de communication détecté ; ledit dispositif étant **caractérisé en ce qu'**il comporte :
- un module de mise en relation (SERV), accessible en mode serveur sur au moins un port prédéterminé écouté via au moins un protocole particulier, ce module de mise en relation étant configuré pour, en réponse à une requête d'établissement d'une communication pair-à-pair adressée au premier dispositif, sur un port (P) parmi ledit au moins un port prédéterminé et via un protocole (PROT) parmi ledit au moins un protocole particulier pour écouter ce port (P), par un deuxième dispositif détecté par le module de détection, échanger avec ledit deuxième dispositif des informations requises pour établir une communication pair-à-pair avec ledit deuxième dispositif et établir ladite communication pair-à-pair ;
dans lequel ladite application de communication pair-à-pair est en outre apte à envoyer sur un port parmi ledit au moins un port prédéterminé et selon un protocole parmi ledit au moins un protocole particulier pour ce port , une requête d'établissement d'une communication pair-à-pair à un troisième dispositif de communication détecté par le module de détection.

2. Dispositif de communication selon la revendication 1 dans lequel ladite application de communication pair-à-pair est une application de communication en temps-réel.

3. Dispositif de communication selon la revendication 1 ou la revendication 2 dans lequel ledit module de mise en relation est conforme à la technologie WebRTC.

4. Dispositif de communication selon l'une quelconque des revendications 1 à 3 dans lequel le module de mise en relation est apte à échanger avec ledit deuxième dispositif de communication des informations relatives à des capacités du premier et/ou du deuxième dispositif et/ou des informations requises pour l'établissement de la communication pair-à-pair entre le premier et le deuxième dispositif.

5. Dispositif de communication selon l'une quelconque des revendications 1 à 4 dans lequel le module de détection est apte à détecter des dispositifs de communication utilisant une pluralité d'interfaces de connexion distinctes.

6. Dispositif de communication selon l'une quelconque des revendications 1 à 5 dans lequel ladite application de communication pair-à-pair est apte à interroger au moins un module de routage (ROUT) pour identifier au moins un dispositif de communication avec lequel établir une communication pour router un message.

7. Dispositif de communication selon la revendication 6 comprenant un dit module de routage.

8. Dispositif selon la revendication 6 ou 7 **caractérisé en ce que** ladite application de communication pair-à-pair est apte à interroger au moins un dit module de routage localisé dans un réseau externe à un réseau de communication auquel appartient le premier dispositif.

9. Dispositif selon l'une quelconque des revendications 1 à 8 dans lequel l'application de communication est configurée pour envoyer la requête d'établissement à un module de mise en relation du troisième dispositif de communication.

10. Réseau de communication (1) comprenant une pluralité de dispositifs de communication (D1-D5) conformes à l'une quelconque des revendications 1 à 9.

11. Réseau de communication selon la revendication 10 comprenant au moins deux dispositifs de communication appartenant à des sous-réseaux maillés pair-à-pair distincts.

12. Réseau de communication selon la revendication 10 ou 11 comprenant au moins un module de routage (ROUT) susceptible d'être interrogé par au moins un dispositif de communication du réseau pour identifier un autre dispositif de communication du réseau de communication avec lequel établir une communication pour router un message.

13. Réseau de communication selon la revendication 12 dans lequel ledit au moins un module de routage est intégré dans au moins un dispositif de communication du réseau de communication.

14. Ensemble logiciel comprenant une application (APP(P2P)) de communication pair-à-pair, un module de détection (DET) et un module de mise en relation (SERV), se présentant respectivement sous forme d'instructions de programmes d'ordinateur stockés dans la mémoire morte d'un premier dispositif de communication comportant au moins un processeur,
(i) les instructions du module de détection lui permettant lorsqu'elles sont exécutées par un processeur de :
- détecter au moins un dispositif de communication comprenant ladite application de communication pair-à-pair, et
- établir une connexion avec ledit dispositif de communication détecté
(ii) les instructions du module de mise en relation lui permettant lorsqu'elles sont exécutées par un processeur :
- d'être accédé en mode serveur sur un premier port et via un premier protocole ;
- en réponse à une requête d'établissement d'une communication pair-à-pair adressée au premier dispositif sur ledit premier port et via ledit premier protocole par un deuxième dispositif détecté par le module de détection, échanger avec ledit deuxième dispositif des informations requises pour établir une communication pair-à-pair avec ledit deuxième dispositif et établir ladite communication pair-à-pair ;
(iii) les instructions de l'application (APP(P2P)) de communication pair-à-pair lui permettant lorsqu'elles sont exécutées par un processeur d'envoyer sur ledit premier port et via ledit premier protocole une requête d'établissement d'une communication pair-à-pair à un troisième dispositif de communication détecté par le module de détection.

15. Ensemble logiciel selon la revendication 14, dans lequel les instructions du module de mise en relation lui permettent lorsqu'elles sont exécutées par un processeur, d'échanger avec ledit deuxième dispositif de communication des informations relatives à des capacités du premier et/ou du deuxième dispositif et/ou des informations requises pour l'établissement de la communication pair-à-pair entre le premier et le deuxième dispositif.

## Patentansprüche

1. Kommunikationsvorrichtung (D1-D5), als erste Vorrichtung bezeichnet, die Folgendes beinhaltet:
- eine Peer-to-Peer-Kommunikationsanwendung (APP(P2P)); und
- ein Detektionsmodul (DET), das dazu konfiguriert ist, mindestens eine Kommunikationsvorrichtung zu detektieren, die die Peer-to-Peer-Kommunikationsanwendung beinhaltet, wobei dieses Detektionsmodul fähig ist, mit der detektierten Kommunikationsvorrichtung eine Verbindung aufzubauen; wobei die Vorrichtung **dadurch gekennzeichnet ist, dass** sie Folgendes umfasst:
- ein Verknüpfungsmodul (SERV), auf das im Servermodus an mindestens einem vorgegebenen Port, der über mindestens ein bestimmtes Protokoll abgehört wird, zugegriffen werden kann, wobei dieses Verknüpfungsmodul dazu konfiguriert ist, als Reaktion auf eine Anfrage nach einem Aufbau einer Peer-to-Peer-Kommunikation, die von einer zweiten Vorrichtung, die durch das Detektionsmodul detektiert wird, an einem Port (P) von dem mindestens einen vorgegebenen Port und über ein Protokoll (PROT) von dem mindestens einen bestimmten Protokoll zum Abhören dieses Ports (P) an die erste Vorrichtung gerichtet wird, Informationen, die erforderlich sind, um eine Peer-to-Peer-Kommunikation mit der zweiten Vorrichtung aufzubauen, mit der zweiten Vorrichtung auszutauschen und die Peer-to-Peer-Kommunikation aufzubauen;
wobei die Peer-to-Peer-Kommunikationsanwendung ferner fähig ist, an einen Port von dem mindestens einen vorgegebenen Port und gemäß einem Protokoll von dem mindestens einen bestimmten Protokoll für diesen Port eine Anfrage nach einem Aufbau einer Peer-to-Peer-Kommunikation an eine dritte Kommunikationsvorrichtung, die durch das Detektionsmodul detektiert wird, zu senden.

2. Kommunikationsvorrichtung nach Anspruch 1, wobei die Peer-to-Peer-Kommunikationsanwendung eine Echtzeitkommunikationsanwendung ist.

3. Kommunikationsvorrichtung nach Anspruch 1 oder Anspruch 2, wobei das Verknüpfungsmodul der WebRTC-Technologie entspricht.

4. Kommunikationsvorrichtung nach einem beliebigen der Ansprüche 1 bis 3, wobei das Verknüpfungsmodul fähig ist, mit der zweiten Kommunikationsvorrichtung Informationen über Kapazitäten der ersten und/oder der zweiten Vorrichtung und/oder Informationen, die für den Aufbau der Peer-to-Peer-Kommunikation zwischen der ersten und der zweiten Vorrichtung erforderlich sind, auszutauschen.

5. Kommunikationsvorrichtung nach einem beliebigen der Ansprüche 1 bis 4, wobei das Detektionsmodul fähig ist, Kommunikationsvorrichtungen zu detektieren, die eine Vielzahl von unterschiedlichen Verbindungsschnittstellen verwenden.

6. Kommunikationsvorrichtung nach einem beliebigen der Ansprüche 1 bis 5, wobei die Peer-to-Peer-Kommunikationsanwendung fähig ist, mindestens ein Routing-Modul (ROUT) abzufragen, um mindestens eine Kommunikationsvorrichtung, mit der zum Routen einer Nachricht eine Kommunikation aufgebaut werden soll, zu identifizieren.

7. Kommunikationsvorrichtung nach Anspruch 6, die ein solches Routing-Modul beinhaltet.

8. Vorrichtung nach Anspruch 6 oder 7, **dadurch gekennzeichnet, dass** die Peer-to-Peer-Kommunikationsanwendung fähig ist, mindestens ein solches Routing-Modul abzufragen, das sich in einem Netzwerk außerhalb eines Kommunikationsnetzwerks, zu dem die erste Vorrichtung gehört, befindet.

9. Vorrichtung nach einem beliebigen der Ansprüche 1 bis 8, wobei die Kommunikationsanwendung dazu konfiguriert ist, die Aufbauanfrage an ein Verknüpfungsmodul der dritten Kommunikationsvorrichtung zu senden.

10. Kommunikationsnetzwerk (1), das eine Vielzahl von Kommunikationsvorrichtungen (D1-D5) beinhaltet, die einem beliebigen der Ansprüche 1 bis 9 entsprechen.

11. Kommunikationsnetzwerk nach Anspruch 10, das mindestens zwei Kommunikationsvorrichtungen beinhaltet, die zu unterschiedlichen vermaschten Peer-to-Peer-Teilnetzwerken gehören.

12. Kommunikationsnetzwerk nach Anspruch 10 oder 11, das mindestens ein Routing-Modul (ROUT) beinhaltet, das durch mindestens eine Kommunikationsvorrichtung des Netzwerks abgefragt werden kann, um eine andere Kommunikationsvorrichtung des Kommunikationsnetzwerks zu identifizieren, mit der zum Routen einer Nachricht eine Kommunikation aufgebaut werden soll.

13. Kommunikationsnetzwerk nach Anspruch 12, wobei das mindestens eine Routing-Modul in mindestens eine Kommunikationsvorrichtung des Kommunikationsnetzwerks integriert ist.

14. Softwarepaket, das eine Peer-to-Peer-Kommunikationsanwendung (APP(P2P)), ein Detektionsmodul (DET) und ein Verknüpfungsmodul (SERV) beinhaltet, die jeweils in Form von Computerprogrammanweisungen vorliegen, die in dem Festspeicher einer ersten Kommunikationsvorrichtung, die mindestens einen Prozessor umfasst, gespeichert sind,
(i) wobei die Anweisungen des Detektionsmoduls diesem Folgendes gestatten, wenn sie durch einen Prozessor ausgeführt werden:
- Detektieren mindestens einer Kommunikationsvorrichtung, die die Peer-to-Peer-Kommunikationsanwendung beinhaltet, und
- Aufbauen einer Verbindung mit der detektierten Kommunikationsvorrichtung,
(ii) wobei die Anweisungen des Verknüpfungsmoduls diesem Folgendes gestatten, wenn sie durch einen Prozessor ausgeführt werden:
- dass im Servermodus an einem ersten Port und über ein erstes Protokoll auf es zugegriffen wird;
- dass als Reaktion auf eine Anfrage nach einem Aufbau einer Peer-to-Peer-Kommunikation, die von einer zweiten Vorrichtung, die durch das Detektionsmodul detektiert wird, an dem ersten Port und über das erste Protokoll an die erste Vorrichtung gerichtet wird, Informationen, die erforderlich sind, um eine Peer-to-Peer-Kommunikation mit der zweiten Vorrichtung aufzubauen, mit der zweiten Vorrichtung ausgetauscht werden und die Peer-to-Peer-Kommunikation aufgebaut wird;
(iii) wobei die Anweisungen der Peer-to-Peer-Kommunikationsanwendung (APP(P2P)), wenn sie durch einen Prozessor ausgeführt werden, dieser gestatten, an den ersten Port und über das erste Protokoll eine Anfrage nach einem Aufbau einer Peer-to-Peer-Kommunikation an eine dritte Kommunikationsvorrichtung, die durch das Detektionsmodul detektiert wird, zu senden.

15. Softwarepaket nach Anspruch 14, wobei die Anweisungen des Verknüpfungsmoduls, wenn sie durch einen Prozessor ausgeführt werden, diesem gestatten, mit der zweiten Kommunikationsvorrichtung Informationen über Kapazitäten der ersten und/oder der zweiten Vorrichtung und/oder Informationen, die für den Aufbau der Peer-to-Peer-Kommunikation zwischen der ersten und der zweiten Vorrichtung erforderlich sind, auszutauschen.

## Claims

1. Communication device (D1-D5), called first device, comprising:
- a peer-to-peer communication application (APP(P2P)); and
- a detection module (DET) configured to detect at least one communication device comprising said peer-to-peer communication application, this detection module being able to set up a connection with said detected communication device;
said device being **characterized in that** it comprises:
- an interlinking module (SERV), accessible in server mode on at least one predetermined port listened to via at least one particular protocol, this interlinking module being configured to, in response to a request to set up a peer-to-peer communication addressed to the first device, on a port (P) out of said at least one predetermined port and via a protocol (PROT) out of said at least one particular protocol for listening to this port (P), by a second device detected by the detection module, exchange with said second device information required to set up a peer-to-peer communication with said second device and set up said peer-to-peer communication;
wherein said peer-to-peer communication application is also able to send, over a port out of said at least one predetermined port, and according to a protocol out of said at least one particular protocol for this port, a request to set up a peer-to-peer communication to a third communication device detected by the detection module.

2. Communication device according to Claim 1, wherein said peer-to-peer communication application is a real-time communication application.

3. Communication device according to Claim 1 or Claim 2, wherein said interlinking module is conformed to the WebRTC technology.

4. Communication device according to any one of Claims 1 to 3, wherein the interlinking module is able to exchange, with said second communication device, information relating to the capacities of the first device and/or of the second device and/or information required for the setting up of the peer-to-peer communication between the first device and the second device.

5. Communication device according to any one of Claims 1 to 4, wherein the detection module is able to detect communication devices using a plurality of distinct connection interfaces.

6. Communication device according to any one of Claims 1 to 5, wherein said peer-to-peer communication application is able to interrogate at least one routing module (ROUT) to identify at least one communication device with which to set up a communication to route a message.

7. Communication device according to Claim 6, comprising a said routing module.

8. Device according to Claim 6 or 7, **characterized in that** said peer-to-peer communication application is able to interrogate at least one said routing module located in a network external to a communication network to which the first device belongs.

9. Device according to any one of Claims 1 to 8, wherein the communication application is configured to send the setup request to an interlinking module of the third communication device.

10. Communication network (1) comprising a plurality of communication devices (D1-D5) conforming to any one of Claims 1 to 9.

11. Communication network according to Claim 10, comprising at least two communication devices belonging to distinct meshed peer-to-peer subnetworks.

12. Communication network according to Claim 10 or 11, comprising at least one routing module (ROUT) that can be interrogated by at least one communication device of the network to identify another communication device of the communication network with which to set up a communication to route a message.

13. Communication network according to Claim 12, wherein said at least one routing module is incorporated in at least one communication device of the communication network.

14. Software set comprising a peer-to-peer communication application (APP(P2P)), a detection module (DET) and an interlinking module (SERV), respectively in the form of computer programme instructions stored in the read-only memory of a first communication device comprising at least one processor,
(i) the instructions of the detection module allowing it, when they are executed by a processor, to:
- detect at least one communication device comprising said peer-to-peer communication application, and
- set up a connection with said detected communication device
(ii) the instructions of the interlinking module allowing it, when they are executed by a processor, to:
- be accessed in server mode on a first port and via a first protocol;
- in response to a request to set up a peer-to-peer communication addressed to the first device on said first port and via said first protocol by a second device detected by the detection module, exchange with said second device information required to set up a peer-to-peer communication with said second device and set up said peer-to-peer communication;
(iii) the instructions of the peer-to-peer communication application (APP(P2P)) allowing it, when they are executed by a processor, to send over said first port and via said first protocol a request to set up a peer-to-peer communication to a third communication device detected by the detection module.

15. Software set according to Claim 14, wherein the instructions of the interlinking module allow it, when they are executed by a processor, to exchange, with said second communication device, information relating to the capacities of the first device and/or of the second device and/or information required to set up the peer-to-peer communication between the first device and the second device.
